# EUROPÄISCHE PATENTSCHRIFT

(11) **EP 1 751 703 B1**
(45) Veröffentlichungstag und Bekanntmachung des Hinweises auf die Patenterteilung: **29.08.2007**
(21) Anmeldenummer: 05728628.8
(22) Anmeldetag: 19.03.2005
(51) Int. Cl.: G06K 19/077, G06F 3/06

(54) **SPEICHERSTIFT MIT EINER KAPPE**
MEMORY STICK COMPRISING A CAP
BARRETTE MEMOIRE MUNIE D'UN CAPOT DE PROTECTION

(30) Priorität: 31.03.2004 DE 202004005045 U
(43) Veröffentlichungstag der Anmeldung: 14.02.2007
(73) Patentinhaber: Weidmüller Interface GmbH & Co. KG, 32758 Detmold (DE)
(72) Erfinder: HOLTERHOFF, Klaus, 57462 Olpe (DE)
(74) Vertreter: Dantz, Jan Henning
(86) Internationale Anmeldenummer: PCT/EP2005/002969
(87) Internationale Veröffentlichungsnummer: WO 2005/098747

(56) Entgegenhaltungen:
- DE-U1- 20 208 316
- US-A1- 2003 043 111

## Beschreibung

Die vorliegende Erfindung betrifft einen Speicherstift mit einer Kappe gemäß dem Oberbegriff des Anspruches 1.

Ein solcher Speicherstift wird in Dokument DE 202 08316 U1 offenbart.

Derartige Speicherstifte dienen als externe Datenspeicher, auf denen insbesondere Dateien, die an einem Rechner - insbesondere einem PC - erstellt wurden, speicherbar sind, welche später aufgrund der transportablen Auslegung des Speicherstifts problemlos auf einem anderen Rechner abrufbar sind. Insbesondere am Markt durchgesetzt haben sich kompakte Speicherstifte mit einer USB-Schnittstelle und einem Speichervolumen von derzeit ca. 64 - 2048 MB.

Ein besonders bevorzugter Einsatzbereich der Speicherstifte ist das Speichern und Abrufen von Präsentationsdateien. Zur Präsentation von gespeicherten Dateien erfolgt dabei ein Einstecken in den jeweils am Ort der Präsentation vorhandenen Rechner, mit dem der Speicherstift dann verbunden ist.

Um eine Beschädigung der Kontakte zum Rechner bei Nichtnutzung des Speicherstiftes, insbesondere bei dessen Transport zu verhindern, ist in der Regel eine abnehmbare Kappe vorgesehen, welche den. Stecker umhüllt und vor Benutzung des Speicherstiftes entfernt wird.

Der vorliegenden Erfindung liegt die Aufgabe zugrunde, einen Speicherstift der gattungsgemäßen Art so weiterzuentwickeln, dass seine Einsatzmöglichkeiten auf einfache Weise erweitert werden.

Diese Aufgabe wird durch einen Speicherstift gelöst, der die Merkmale des Anspruches 1 aufweist.

Vorteilhafte Ausgestaltungen sind den Unteransprüchen zu entnehmen.

Es ist zwar an sich bekannt, Präsentationen mittels externer Fernsteuerungen, die drahtlos oder über eine Drahtverbindung mit dem PC verbunden sind, zu steuern, durch die Integration des Funktionselementes in den Speicherstift wird aber die bei drahtloser Bedienung notwendige Sende- und Empfangseinheit auf einfache Weise in den Speicherstift integriert, so dass zwei Funktionseinheiten - zum einen Sender und Empfänger und zum anderen der Datenstift mit der Kappe in eine einzige Funktionseinheit - den Datenstift mit dem Empfänger und die Kappe mit dem Sender - integriert werden. Der Benutzer ist derart auf einfache Weise in der Lage, die auf dem Datenspeicher des Speicherstifts abgelegte Ausarbeitung im Zusammenwirken mit dem im angeschlossen Computer vorhandenen Basisprogramm in gewissem Maße standortunabhängig zu präsentieren. Hierzu zählt beispielsweise das Starten und Beenden, das Vor- und Rücklaufen, das Umblättern von dargestellten Seiten oder dergleichen.

Besonders bevorzugt ist zur Steuerung des Ablaufes von Präsentationen als das Funktionselement (lediglich) ein hin und her bewegbarer Schieber (mit zwei Kontaktstellungen "Up/Down") an der Kappe angeordnet. Der kostengünstig zu realisierende Schieber wird bevorzugt allein zum Blättern z.B. in Präsentationen eingesetzt, da dies die in der Regel am meisten benötigte Funktion ist. Ggf. erforderlich ist in diesem Fall selbstverständlich eine entsprechende Schaltung sowie entweder eine Installationssoftware zum Speicherstift, die auch auf dem Speicherstift selbst gespeichert sein kann oder diese Funktion wird über Plug & Play eingebunden. Weitere Bedienelemente zur Präsentationssteuerung, welche die Bedienung nur verkomplizieren, werden möglichst nicht realisiert, obwohl sie natürlich an sich auch in die Kappe integrierbar sind.

Zweckmäßig wird in die Kappe ergänzend eine Lichtquelle integriert, insbesondere eine Laserlichtquelle und/oder eine LED. So kann die Kappe als Zeigerelement benutzt werden, wenn der Sender eines Laserlichts integriert ist, mit dem ein Sichtpunkt auf einem Bildobjekt - z.B. einer Leinwand zur Wiedergabe einer Präsentation - erzeugt werden kann. Die LED dient nach Art einer Taschenlampe als Leuchthilfe z.B. beim Aufstecken des Speicherstiftes auf einen Rechner.

Damit stellt die Kappe ein noch vielseitiger einsetzbares Multifunktions-Werkzeug dar, das in Kombination mit dem zugeordneten Speicherstift nutzbar ist und von daher stets zur Hand ist.

Die Leistung des Lasersenders bzw. der Energiequelle ist bevorzugt so bemessen, dass ein entsprechender Zeigerstrahl bis zu 10 m weit reicht. Dies kann auch für die drahtlose Bedienung des Speicherstiftes gelten, wenn z.B. eine Infrarotübertragung realisiert wird. Alternativ sind auch andere Wellenbereiche nutzbar, wie sie im Rechnerbereich eingesetzt werden (Funk, Bluetooth usw.).

Die Energieversorgung der Kappe erfolgt bevorzugt mittels eines Kondensators, vorzugsweise eines Gold-Kondensators, der über den in den Computer eingesteckten Speicherstift aufgeladen wird. In diesem Fall wird die Kappe von der der USB-Stecker abgewandten Seite auf den Speicherstift aufgeschoben, wobei dieser eine Kontaktfläche aufweist, die mit einer entsprechenden Kontaktfläche der Kappe dann in Verbindung steht. Innerhalb einer sehr kurzen Zeit von z.B. unter 2 Sekunden, ist der Kondensator soweit aufgeladen, dass eine ausreichende Strommenge zum Betrieb zur Verfügung steht, mit der über 200 Schaltbewegungen und mindestens 20 Minuten Laserfunktion möglich ist.

Weiter kann die Kappe mit einem Clip versehen sein, durch den nach Art eines Kugelschreibers ein sicherer Halt in einer Bekleidungstasche möglich ist, wenn der Speicherstift bei Nichtgebrauch zusammen mit der aufgesteckten Kappe deponiert bzw. transportiert werden soll. Dieser Clip ist vorzugsweise an der Kappe festgeklemmt, so dass er im Bedarfsfall abnehmbar ist.

Hinsichtlich der Dimensionierung und Form der Kappe sind diese so gewählt, dass sie den haptischen Anforderungen des Benutzers Rechnung tragen, wobei vorzugsweise die Länge der Kappe zwischen 100 und 110 mm, die Breite ca. 20 bis 25, insbesondere 22 mm und die Dicke etwa 7 bis 15, insbesondere 11 mm betragen. Bezüglich der Querschnittskontur der Kappe ist diese so gewählt, dass sie bedienerfreundlich in der Benutzerhand einliegt, das heißt, dass sie unter ergonomischen Gesichtspunkten so geformt ist, dass eine bequeme Betätigung der Bedienelemente gewährleistet ist.

Neben der benutzerfreundlichen Formgebung erfolgt auch die Materialwahl unter diesen Gesichtspunkten, wobei vorzugsweise ein geeigneter Kunststoff oder ein Leichtmetall zum Einsatz kommen. In beiden Fällen kann gestalterischen Wünschen dadurch entsprochen werden, dass zumindest die Kappe in unterschiedlichen Einfärbungen hergestellt wird, wodurch eine besondere Akzeptanz des Produktes erreicht wird.

Durch eine optional in den Speicherstift integrierbare digitale Signatur (durch eingelegte Smart ID-Card oder im Speicher fixierten Seed-Record) kann ein Zugang zu einem Firmenrechner authentifiziert werden, ohne dass umständlich erst ein Code abgelesen und per Tastatur eingegeben werden muß. Damit wird weltweit ein mobiler Datenzugriff auf Netzwerke und geschützte Dateien sichergestellt und vor Mißbrauch geschützt durch eine Authentifizierungstechnologie von z.B. RSA.

Denkbar ist den Speicherstift mit einem sicheren Speicher auszurüsten, bei dem eine frei wählbare Größe des Speicherbereichs geschützt werden kann. Auch können Installationssoftware und/oder Treiber fest oder löschbar auf dem Speicher hinterlegt sein, so dass sich eine Treiber-CD erübrigt-

Weiterhin kann optional in dem Speicherstift auch ein Transponder eingebaut sein, mit dem ein Gebäudezutritt und/oder eine Zeiterfassung kontaktlos möglich ist. Durch die verwendete Technik kann auch die Authentizität einer e-Mail garantiert werden.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen in Nichtgebrauchsstellung in eine Kappe eingesteckten Speicherstift und
- Figur 2: die Kappe und den Speicherstift in einer Explosivdarstellung.

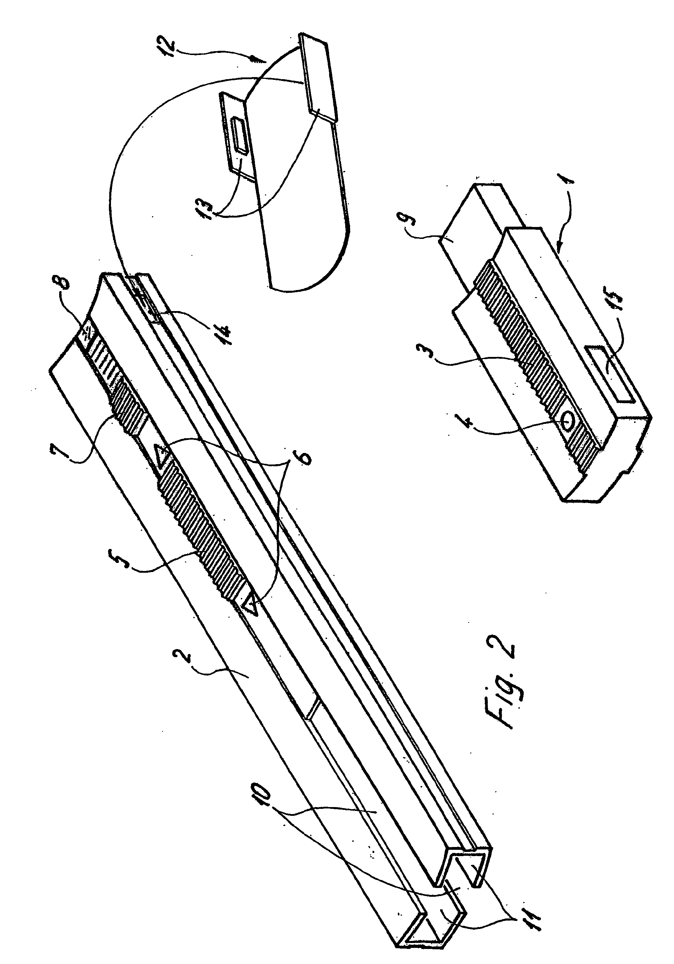

In den Figuren ist ein Speicherstift 1 gezeigt, der einen Stecker 9 (Figur 2) aufweist, der in einen USB (Universeller Serieller Bus)-Anschluss eines nicht dargestellten Computers einsteckbar ist.

Im Innern des Speicherstiftes 1 ist - von dessen Gehäuse umgeben - eine Leiterplatte mit einem Datenspeicher angeordnet, der zur Sicherung von extern erstellten Daten, insbesondere Dateien, einsetzbar ist.

Entsprechend den heute möglichen Speicherkapazitäten kann der Datenspeicher z.B. 128, 256, 512, 1024 oder 2048 MB oder speichern. Optional kann die Leiterplatte mit einer Codierschaltung versehen werden, welche eine Datenmißbrauch z.B. bei der drahtlosen Datenübertragung verhindert.

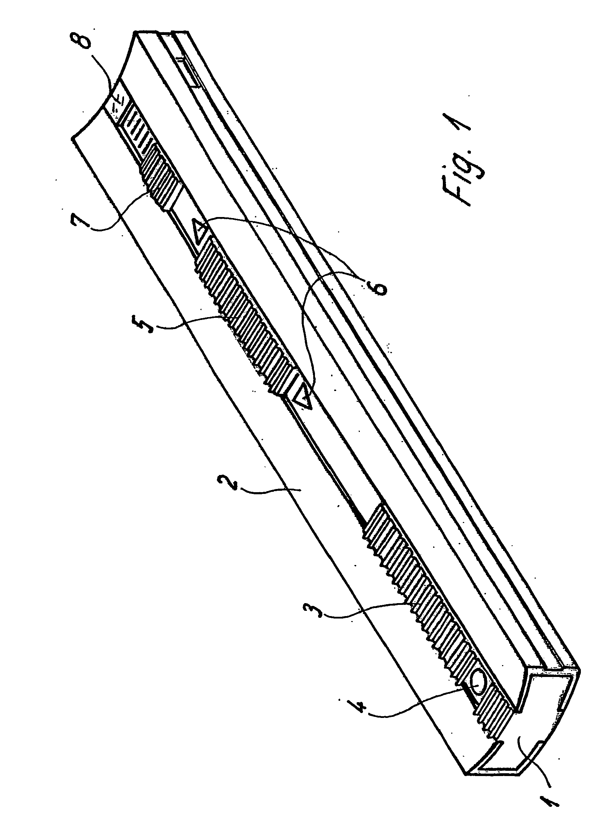

In Nichtgebrauchsstellung, wie sie in der Figur 1 dargestellt ist, ist der Speicherstift 1 mit seinem USB-Stecker 9 voran in eine Kappe 2 eingesteckt, so dass er mantelseitig weitgehend umschlossen ist.

Zur besseren Handhabung, das heißt, um den Speicherstift 1 besser einstecken bzw. herausziehen zu können, ist ein sich in Längsachsrichtung erstreckender Riffelsteg 3 vorgesehen, der mittig angeordnet ist und der gegenüber angrenzenden Seitenflächen etwas erhaben ist.

Der Speicherstift 1 ist bei Nichtgebrauch stirnseitig in die im wesentlichen quaderförmig ausgebildete Kappe 2 einschiebbar, wozu diese zwei sich gegenüberliegende U-förmige Einschubschenkel 11 aufweist, deren offene Seiten einander gegenüberliegen. Im Mittenbereich, sich ebenfalls in Längsachsrichtung erstreckend, sind an den beiden Breitseiten der Kappe 2 Einschubnuten 10 angeordnet, die in ihrer Breite und Länge der Breite bzw. Länge des Riffelsteges 3 entsprechen, so dass die Enden der Einschubnuten 10 jeweils einen Anschlag beim Einschieben des Speicherstiftes 1 bilden. Im übrigen liegt dieser weitgehend spielfrei in der Kappe 2 ein, wobei eine beispielsweise auf den Stecker 9 wirkende Arretierfeder im Innern der Kappe 2 vorgesehen sein kann, durch die der Speicherstift 1 kraftschlüssig in der Kappe 2 gehalten ist.

Der Speicherstift 1 weist eine im Verlauf des Riffelsteges 3 eingebettete LED 4 (Licht emittierende Diode) auf, die z.B. auch als Signallampe dienen kann, durch die eine einwandfreie Funktion in einer in den Computer eingesteckten Gebrauchsstellung signalisiert wird.

Weiter ist der Speicherstift 1 mit einem Kontakt 15 versehen, über den eine Aufladung eines in der Kappe 2 angeordneten Energiespeichers, vorzugsweise eines Gold-Kondensators erfolgt, mit der später beschriebene Funktionsteile der Kappe 2 versorgt werden.

Zum Aufladen dieses Kondensators, der im übrigen nicht dargestellt ist, muss der Speicherstift 1 in den Computer eingesteckt und die Kappe 2 rückseitig auf den Speicherstift 1 aufgesteckt sein, so dass eine entsprechende Kontaktfläche der Kappe 2 diesen Kontakt 15 stromübertragend berührt.

Zu den genannten, in der Kappe 2 integrierten Funktionsteilen gehört zunächst ein Schieber 5, der in Richtung der beiden Richtungspfeile 6 verschiebbar oder drückbar ist und durch den beispielsweise eine in digitaler Form auf dem Datenspeicher liegende Präsentation steuerbar ist, zum Beispiel durch Vor- und Zurückblättern.

Über eine Sender-/Empfängereinheit zwischen dem Speicherstift 1 (Empfänger) und der Kappe 2 (Sender) wird eine Wirkverbindung hergestellt wird, die vorzugsweise per Funksignale erfolgt.

Weiter ist in der Kappe 2 ein Laserlicht-Erzeuger integriert, mit Strahlausgang an der der Einschubseite für den Speicherstift 1 gegenüberliegenden Stirnseite.

In diesem Endbereich der Kappe 2 ist außerdem eine Lichtquelle in Form einer weiteren LED 8 vorgesehen, und zwar auf der Breitseite, die auch den Schieber 5 und den Schiebeschalter 7 beherbergt. Diese besonders hell leuchtende LED 8 ist nach einer Variante nur dann betriebsfähig, wenn der Speicherstift 1 eingeführt ist. Anderseits ist der Laserstrahl ausschließlich bei herausgezogenem Speicherstift 1 aktivierbar. Dabei erfolgt beider Betätigung jeweils durch einen Schiebeschalter 7.

Wie in der Figur 2 sehr deutlich zu sehen ist, weist die Kappe 2 auf den sich gegen-überliegenden Schmalseiten, der Einschubseite für den Speicherstift 1 abgewandt Rastvertiefungen 14 auf, in die Rastbügel 13 eines Clips 12 einrastbar sind, so dass bei Bedarf die Kappe 2 mit oder ohne integriertem Speicherstift 1 im Sinne eines Kugelschreibers in einer Bekleidungstasche oder dergleichen festklemmbar ist.

### Bezugszeichenliste

- Speicherstift: 1
- Kappe: 2
- Riffelsteg: 3
- LED: 4
- Schieber: 5
- Richtungspfeil: 6
- Schiebeschalter: 7
- LED: 8
- Stecker: 9
- Einschubnut: 10
- Einschubschenkel: 11
- Clip: 12
- Rastbügel: 13
- Rastvertiefung: 14
- Kontakt: 15

## Patentansprüche

1. Speicherstift mit einer abnehmbaren Kappe (2) und einem in eine Schnittstelle eines Computers, insbesondere eine USB-Schnittstelle eines Computers, einsteckbaren Stecker (9), der mit einem im Speicherstift angeordneten Datenspeicher verbunden ist wobei der Speicherstift (1) bei Nichtgebrauch mit seinem Stecker (9) voran in die Kappe (2) einsteckbar ist, und wobei am Speicherstift (1) eine Empfängereinheit vorgesehen ist, **dadurch gekennzeichnet, dass**
a) an der Kappe (2) eine der Empfängereinheit korrespondierende Sendereinheit vorgesehen ist, wodurch eine Wirkverbindung zwischen dem Steicherstift (1) und der Kappe (2) bei in den Computer eingesteckter Gebrauchsstellung der Stecker (9) herstellbar ist,
b) in die Kappe (2) ein Funktionselement (5) integriert ist, mit welchem bei in den Computer eingesteckter Gebrauchsstellung der Stecker (9) in dem Datenspeicher abgelegte Daten abruf- und/oder steuerbar sind.

2. Speicherstift nach Anspruch 1, **dadurch gekennzeichnet, dass** das Funktionselement ein in der Kappe (2) hin und her bewegbarer Schieber (5) ist.

3. Speicherstift nach Anspruch 1 oder 2, **dadurch gekennzeichnet, dass** die Kappe (2) eine Lichtquelle, insbesondere eine Laserlichtquelle oder eine LED aufweist.

4. Speicherstift nach Anspruch 3, **dadurch gekennzeichnet, dass** der Laserlicht-Austritt auf der der Einschubseite für den Speicherstift (1) abgewandten Stirnseite vorgesehen ist.

5. Speicherstift nach Anspruch 3 oder 4, **dadurch gekennzeichnet, dass** die Laserlichtquelle und/oder die LED (8) ausschließlich bei in die Kappe (2) eingestecktem Speicherstift (1) funktionsfähig ist/sind.

6. Speicherstift nach Anspruch 3, 4 oder 5, **dadurch gekennzeichnet, dass** der Laserlicht-Sender und/oder die LED (8) über einen Schiebeschalter (7) ein- und ausschaltbar ist/sind.

7. Speicherstift nach einem der vorhergehenden Ansprüche, **dadurch gekennzeichnet, dass** der in die Kappe (2) eingesteckte Speicherstift (1) weitgehend vollständig von der Kappe (2) umschlossen ist.

8. Speicherstift nach einem der vorhergehenden Ansprüche, **dadurch gekennzeichnet, dass** die Kappe (2) als Profilschiene ausgebildet ist.

9. Speicherstift nach einem der vorhergehenden Ansprüche, **dadurch gekennzeichnet, dass** die Kappe (2) zwei sich U-förmige Einschubschenkel (11) aufweist, deren offene Seiten einander gegenüberliegen, wobei im Mittenbereich an den beiden Breitseiten der Kappe (2) Einschubnuten (10) angeordnet sind.

10. Speicherstift nach einem der vorhergehenden Ansprüche, **dadurch gekennzeichnet, dass** in der Kappe (2) ein Kondensator, vorzugsweise ein Gold-Kondensator angeordnet ist.

11. Speicherstift nach Anspruch 10, **dadurch gekennzeichnet, dass** zum Stromfluss zwischen dem Speicherstift (1) und dem Kondensator der Speicherstift (1) einen Kontakt (15) aufweist, der mit dem Kondensator in Wirkverbindung bringbar ist.

12. Speicherstift nach einem der vorhergehenden Ansprüche, **dadurch gekennzeichnet, dass** die Kappe (2) mit einem Clip (12) versehen ist.

13. Speicherstift nach Anspruch 12, **dadurch gekennzeichnet, dass** der Clip (12) mit der Kappe (2) verrastet ist.

14. Speicherstift nach einem der vorhergehenden Ansprüche, **gekennzeichnet durch** eine digitale Signatur, in Form einer Smart ID-Card, eines Seed Records o.dgl.

## Claims

1. Memory stick comprising a removable cap (2) and a plug (9) that can be inserted into a computer interface, in particular a USB interface of a computer, which is connected to a data memory in the memory stick, such that when not in use the memory stick (1) with its plug (9) at the front can be inserted in the cap (2) and such that the memory stick (1) is provided with a receiver unit, **characterised in that**
a) a sender unit corresponding to the receiver unit is provided on the cap (2), by means of which an active connection can be made between the memory stick (1) and the cap (2) when the plug (9) is inserted in its working position it the computer,
b) a functional element (5) is integrated in the cap (2), by means of which data stored in the data memory can be called up and/or controlled when the plug (9) is inserted in its working position it the computer.

2. Memory stick according to Claim 1, **characterised in that** the functional element is a slider (5) that can be moved to and fro in the cap (2).

3. Memory stick according to Claims 1 or 2, **characterised in that** the cap (2) comprises a light source, in particular a laser light source or a LED.

4. Memory stick according to Claim 3, **characterised in that** the laser light outlet is located on the end face remote from the insertion side of the memory stick (1).

5. Memory stick according to Claims 3 or 4, **characterised in that** the laser light source and/or LED (8) is/are functional only when the memory stick (1) is inserted in the cap (2).

6. Memory stick according to Claims 3, 4 or 5, **characterised in that** the laser light sender and/or the LED (8) can be switched on and off by means of a sliding switch (7).

7. Memory stick according to any of the preceding claims, **characterised in that** when the memory stick 1 is inserted into the cap (2), it is enclosed by the cap (2) substantially completely.

8. Memory stick according to any of the preceding claims, **characterised in that** the cap (2) is formed as a profiled rail.

9. Memory stick according to any of the preceding claims, **characterised in that** the cap (2) has two U-shaped insertion arms (11) whose open sides are opposite one another, such that in the middle area insertion grooves (10) are located in the two wide sides of the cap (2).

10. Memory stick according to any of the preceding claims, **characterised in that** a condenser, preferably a gold condenser, is arranged in the cap (2).

11. Memory stick according to Claim 10, **characterised in that** to enable current flow between the memory stick 1 and the condenser, the memory stick 1 has a contact (15) that can be brought into active connection with the condenser.

12. Memory stick according to any of the preceding claims, **characterised in that** the cap (2) is provided with a clip (12).

13. Memory stick according to Claim 12, **characterised in that** the clip (12) is attached with the cap (2).

14. Memory stick according to any of the preceding claims, **characterised by** a digital signature in the form of a Smart ID Card, a Seed Record, or suchlike.

## Revendications

1. Barrette mémoire munie d'un capot amovible (2) et d'une fiche (9) pouvant être enfichée dans une interface d'un ordinateur, en particulier d'une interface USB d'un ordinateur, qui est reliée à une mémoire de données placée dans la barrette mémoire, la barrette mémoire (1) pouvant, en cas de non utilisation, être enfichée auparavant avec sa fiche (9) dans le capot (2), et une unité réceptrice étant prévue sur la barrette mémoire (1),
**caractérisée en ce que**
a) sur le capot (2) est prévue une unité émettrice correspondant à l'unité réceptrice, de sorte qu'une liaison active peut être réalisée entre la barrette mémoire (1) et le capot (2) dans la position d'utilisation de la fiche (9) enfichée dans l'ordinateur,
b) dans le capot (2) est intégré un élément fonctionnel (5), avec lequel, dans la position d'utilisation de la fiche (9) enfichée dans l'ordinateur, des données enregistrées dans la mémoire de données peuvent être appelées et/ou commandées.

2. Barrette mémoire selon la revendication 1, **caractérisée en ce que** l'élément fonctionnel est un poussoir (5) mobile en va-et-vient dans le capot (2).

3. Barrette mémoire selon la revendication 1 ou 2, **caractérisée en ce que** le capot (2) présente une source lumineuse, en particulier une source lumineuse laser ou une diode électroluminescente.

4. Barrette mémoire selon la revendication 3, **caractérisée en ce que** la sortie de lumière laser est prévue sur le côté frontal opposé au côté d'insertion de la barrette mémoire (1).

5. Barrette mémoire selon la revendication 3 ou 4, **caractérisée en ce que** la source de lumière laser et/ou la diode électroluminescente (8) est/sont fonctionnelle(s) uniquement quand la barrette mémoire (1) est insérée dans le capot (2).

6. Barrette mémoire selon la revendication 3, 4 ou 5, **caractérisée en ce que** l'émetteur de lumière laser et/ou la diode électroluminescente (8) peut/peuvent être mis en route et à l'arrêt par l'intermédiaire d'un commutateur à poussoir (7).

7. Barrette mémoire selon l'une des revendications précédentes, **caractérisée en ce que** la barrette mémoire (1) insérée dans le capot (2) est entourée pour l'essentiel complètement par le capot (2).

8. Barrette mémoire selon l'une des revendications précédentes, **caractérisée en ce que** le capot (2) est conformé en rail profilé.

9. Barrette mémoire selon l'une des revendications précédentes, **caractérisée en ce que** le capot (2) présente deux branches d'insertion (11) en forme de U dont les côtés ouverts se font face, des rainures d'insertion (10) étant placées dans la zone centrale sur les deux grands côtés du capot (2).

10. Barrette mémoire selon l'une des revendications précédentes, **caractérisée en ce qu'**un condensateur, de préférence un condensateur à l'or, est placé dans le capot (2).

11. Barrette mémoire selon la revendication 10, **caractérisée en ce que**, pour le passage du courant entre la barrette mémoire (1) et le condensateur, la barrette mémoire (1) présente un contact (15) qui peut être mis en liaison active avec le condensateur.

12. Barrette mémoire selon l'une des revendications précédentes, **caractérisée en ce que** le capot (2) est muni d'un clip (12).

13. Barrette mémoire selon la revendication 12, **caractérisée en ce que** le clip (12) est enclenché avec le capot (2).

14. Barrette mémoire selon l'une des revendications précédentes, **caractérisée par** une signature numérique, sous la forme d'une Smart ID-Card, d'un Seed Record ou analogue.
